# EUROPEAN PATENT SPECIFICATION

(11) **EP 1 722 579 B1**
(45) Date of publication and mention of the grant of the patent: **04.03.2009**
(21) Application number: 05783906.0
(22) Date of filing: 06.09.2005
(51) Int. Cl.: H04W 4/00, H04M 1/725

(54) **A DUAL MODE TERMINAL AND A METHOD OF REALIZING DUAL MODE ACCESS THEREOF**
DUAL-MODE-ENGERÄT UND VERFAHREN ZUR BEREITSTELLUNG EINES ENTSPRECHENDEN DUAL-MODE-ZUGANGS
TERMINAL DOUBLE MODE ET SON PROCEDE DE REALISATION

(30) Priority: 06.09.2004 CN 200410073939
(43) Date of publication of application: 15.11.2006
(73) Proprietor: Huawei Technologies Co., Ltd., Longgang District, Shenzhen, Guangdong Province 518129 (CN)
(72) Inventor: LIANG, Xingang, Huawei Administration Building, Shenzhen, Guangdong 518129 (CN); YANG, Pengliang, Huawei Administration Building, Shenzhen, Guangdong 518129 (CN)
(74) Representative: Skuhra, Udo
(86) International application number: PCT/CN2005/001412
(87) International publication number: WO 2006/026916

(56) References cited:
- EP-A- 0 935 377
- EP-A1- 0 690 600
- EP-A2- 1 448 013
- GB-A- 2 311 911
- GB-A- 2 358 771
- US-A- 5 659 598
- US-B1- 6 327 470

## Description

### Field of the Technology

The present invention relates to techniques of applying a wireless terminal in different communication networks, more particularly to a dual-mode terminal for implementing dual-mode access through the dual-mode terminal which can be applied in wireless and fixed communication networks.

### Background of the Invention

At present, wireless terminals can only access wireless communication networks through one wireless access mode, for instance, a Wide Code Division Multiple Access (WCDMA) terminal can only access the WCDMA network through the WCDMA mode; a Global System of Mobile (GSM) terminal can only access the GSM network through the GSM mode.

With the development of communication technologies, wireless terminals can access two types of wireless communication networks through two wireless access modes, such as: a dual-mode terminal, supporting both WCDMA and GSM, can access the WCDMA network and the GSM network respectively through the WCDMA wireless mode and the GSM wireless mode. However, there are no dual-mode terminals that can access both fixed network and wireless network yet.

European patent application EP 0690600 provides a cellular telephone with a wire connection function. With this function, a telephone call which is made to the home while the user is out can be connected to a terminal designated by the user. In addition, telephone conference can also be performed by using this cellular telephone. European patent application EP 0935 377 A2 provides a cordless telephone having the ability to operate when power fails to the base unit. UK patent application GB 2358 771 A provides a mobile transponder allowing cordless phone to communicated with cellular and wireline networks.

### Summary of the Invention

The present invention provides a dual-mode terminal, which can access both fixed and wireless communication networks. The dual-mode terminal can switch between the fixed network and the wireless network, so that the dual-mode terminal can communicate in both fixed and wireless communication networks respectively.

### The technical solution of the present invention is implemented as follows:

A dual-mode terminal includes: a wireless interface module; a wireless access module and a wireless protocol processing module, for processing received wireless signals to implement a wireless communication; a wireline access module and a wireline protocol processing module, connected to each other, for implementing a wireline communication by processing the wireline signals received from a switching control module;
the switching control module, connected with the wireless access module, the wireline interface module and the wireline access module respectively, for monitoring plugging/pulling states of a telephone line in the wireline interface module, controls the switching between the wireline access module and the wireless access module according to the plugging/pulling states, sends a switching signal to a protocol control module, and forwards the wireline signals received from the wireline interface module to the wireline access module when it switches to the wireless access module;
the protocol control module, connected with the switching control module, the wireless protocol processing module and the wireline protocol processing module respectively, for receiving the switching signal from the switching control module and switching between the wireline protocol processing module and the wireless protocol processing module according to the switching signal; and
the terminal is configured with a wireless number and a wireline number, and adapted to send a call transfer signal to a network side to transfer a call directed to the wireless number to the wireline number or transfer a call directed to the wireline number to the wireless number.

A method for implementing dual-mode access using the terminal described above, including:
sending, by the terminal, a call transfer signal to a network side to transfer a call directed to wireless number to the wireline number or transfer a call directed to the wireline number to the wireless number.

It can be seen from the above-mentioned scheme that, the present invention provides a dual-mode terminal that integrates functions of a wireline telephone into a wireless terminal. A switching control module is added to switch the signal receiving state of the terminal according to the current monitored state. In other words, when a telephone line is plugged-in, the signal receiving state of the dual-mode terminal is switched to the wireline access state; when there is no telephone line being plugged-in, the signal receiving state of the dual-mode terminal is switched to the wireless access state. Therefore, the dual-mode terminal provided by the present invention can access both the fixed and the wireless communication network and switch between the fixed and the wireless communication network, so that the dual-mode terminal can communicate in both the fixed and the wireless communication network.

### Brief Description of the Drawings

Figure 1 is a schematic diagram illustrating the structure of a dual-mode terminal according to an embodiment of the present invention.
Figure 2 is a schematic diagram illustrating a connection between the wireline interface module and the telephone line according to an embodiment of the present invention.
Figure 3 is a flowchart illustrating a method for the dual-mode terminal to receive communication signals through dual modes.

### Detailed Description of the Invention

The present invention will be illustrated in detail hereinafter with reference to the accompanying drawings and specific embodiments.

In the present embodiment, modules supporting fixed communication systems are added to a wireless terminal that supports wireless communication systems, so that the wireless terminal can support both the wireless communication system and the fixed communication system.

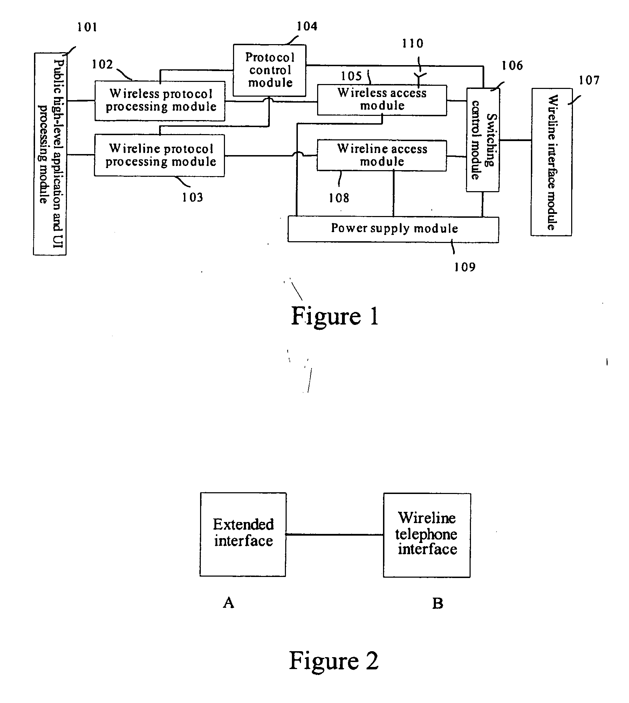

Figure 1 is a schematic diagram illustrating the structure of a dual-mode terminal according to an embodiment of the present invention. As shown in Figure 1, the dual-mode terminal includes: a common upper-layer application and UI processing module 101, a wireless protocol processing module 102, a wireline protocol processing module 103, a protocol control module 104, a wireless access module 105, a switching control module 106, a wireline interface module 107, a wireline access module 108 and a wireless interface module 110.

The Common upper-layer application and UI processing module 101 is connected with the wireless protocol processing module 102 and the wireline protocol processing module 103 respectively. The protocol control module 104 is connected with the wireless protocol processing module 102, the wireline protocol processing module 103 and the switching control module 106 respectively. The wireless access module 105 is connected with the wireless protocol processing module 102, the switching control module 106 and the wireless interface module 110 respectively. The wireline access module 108 is connected with the wireline protocol processing module 103 and the switching control module 106 respectively. The switching control module 106 is connected with the wireline interface module 107.

The wireless terminal also includes a power supply module 109, which is connected with the wireline access module 108, the wireless access module 105 and the switching control module 106, and is used for supplying power for the wireline access module 108, the wireless access module 105 and the switching control module 106. Certainly, if there is no power supply module, the wireline access module 108, the wireless access module 105 and the switching control module 106 can be directly supplied with power by an external power supply unit or an internal power supply unit.

When the power supply module 109 is powered on, the switching control module 106 starts to monitor in real-time whether there is any telephone line being plugged in the wireline interface module, if there is a telephone line being plugged in, the switching control module 106 sets its own state to be a wireline signal receiving state, and sends a signal indicating the wireline signal receiving state to the protocol control module 104. After receiving the signal, the protocol control module 104 sends an operation control signal to the wireline protocol processing module, and the wireline protocol processing module starts to work after receiving the control signal.

Thus, the wireline interface module 107 sends the received wireline signal to the switching control module, the switching control module forwards the wireline signal to the wireline access module 108, and then the wireline access module 108 sends the wireline signal to the wireline protocol processing module 103, the wireline protocol processing module 103 processes the wireline signal and then sends the signal to the common upper-layer application and UI processing module 101.

If the switching control module 106 detects that there is no telephone line being plugged in the wireline interface module 107 after the power supply module 109 is powered on, the switching control module 106 will set its own state to be a wireless signal receiving state and send a signal indicating the wireless signal receiving state to the protocol control module 104. After receiving the signal, the protocol control module 104 sends the operation control signal to the wireless protocol processing module 102, and then the wireless protocol processing module 102 operates accordingly.

At this time, the wireless terminal is in a wireless telephone operation state. The wireless interface module 110 sends the received wireless signals to the wireless protocol processing module 102 through the wireless access module 105. The Wireless protocol processing module 102 processes the wireless signals and then sends the signals to the common upper-layer application and UI processing module 101.

Moreover, the switching control module 106 needs to monitor in a real-time manner whether there is any telephone line being plugged in the wireline interface module 107, if there is, the switching control module 106 switches its state from the wireless signal receiving state to the wireline signal receiving state, and sends a signal to the protocol control module 104, indicating it to switch to the wireline signal receiving state. After receiving the signal, the protocol processing module 104 controls the wireline protocol processing module 103 to start to operate, and controls the wireless protocol processing module 102 to stop operating.

At this time, the dual-mode module is in a wireline telephone operation state, and the wireless terminal can receive the wireline communication signals through the telephone line.

When the wireless terminal is in the wireline access state, if the switching control module 106 detects that the telephone line is pulled out of the wireline interface module 107 during the real-time monitoring, then the switching control module 106 will switch the state from the wireline signal receiving state to the wireless signal receiving state, i.e. switch to the wireless access module. The switching control module 106 sends a signal to the protocol control module, indicating it to switch to the wireless signal receiving state. After receiving the signal, the protocol control module 104 controls the wireless protocol processing module to operate and controls the wireline protocol processing module to stop operating. At this time, the wireless terminal is in the wireless telephone operating state and can receive wireless communication signals through the wireless interface module.

The common upper-layer application and UI processing module in the present embodiment is a module above protocol stack modules, and it provides with services as Short Message Service (SMS), telephone call and internet browser, etc. This module is not influenced by the wireline access protocol process and the wireless access protocol process, i.e., this module can operate in both wireless operating state and the wireline operating state of the wireless terminal.

The wireless interface module is an antenna which receives wireless communication signals.

The wireline interface module in the present embodiment is a standard hardware interface of the wireline telephone, as shown in Figure 2, wherein, A is an extended interface of the wireless terminal, and can be designed by designers; B is the wireline telephone interface in the telephone line and can be plugged into the extended interface of the wireless terminal to transmit wireline signals.

The step of the switching control module 106 monitoring whether there is telephone line being plugged in the wireline access module can be implemented by: the wireline telephone judging whether there is any access to the interface as in the prior art, such as, monitoring the voltage variations according to the fact that the voltage will rise when a telephone line is plugged-in, or by monitoring whether there is a wireline telephone signaling according to the fact that there will be a wireline telephone signaling when the telephone line is plugged-in.

The wireline protocol processing module 103 or the wireless protocol processing module 102 performs corresponding protocol analysis upon the wireless or wireline signals, and thereby implements the wireless or wireline communication.

In the present embodiment, a wireline telephone is integrated into the wireless terminal, and a switching control module is added to switch the signal receiving state of the wireless terminal according to the current monitored state. In other words, when a telephone line is plugged-in, the signal receiving state of the wireless terminal will be switched to the wireline signal receiving state; and when no wireline telephone line is plugged-in, the signal receiving state of the wireless terminal will be switched to the wireless signal receiving state.

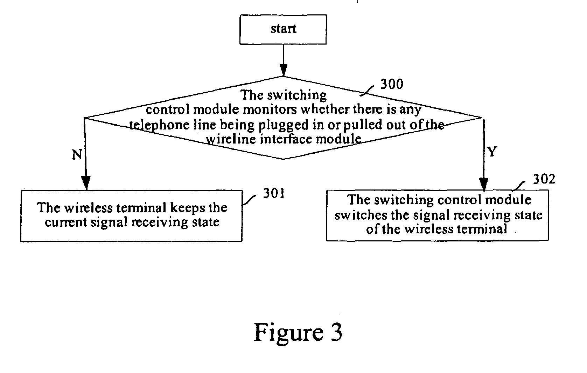

Figure 3 is a flowchart illustrating the method for the dual-mode terminal to receive communication signals through dual modes, which includes the following steps:
Step 300: the switching control module of the wireless terminal monitors whether there is any telephone line plugged in or pulled out of the wireline interface module, if there is, executes step 302; otherwise, executes step 301.
   When a telephone line is plugged in the wireline interface module in advance, the switching control module monitors whether there is any telephone line is pulled out of the wireline interface module;
   when no wireless telephone line is plugged in the wireline interface module in advance, the switching control module monitors whether any telephone line is plugged in the wireline interface module.
Step 301: the wireless terminal keeps the current signal receiving state.
Step 302: the switching control module of the wireless terminal switches the current signal receiving state of the wireless terminal, and then ends the current procedure.

The switching control module switches the current signal receiving state from the wireline signal receiving state to the wireless signal receiving state when detecting a telephone line is pulled out of the wireline interface module,;

The switching control module switches the current signal receiving state from the wireless signal receiving state to the wireline signal receiving state when detecting a telephone line is plugged in the wireline interface module.

Since the wireless terminal has the simultaneous wireless and wireline abilities, thereby it can perform both the wireless and the wireline communication. Therefore, the wireless terminal will use a wireless number as well as a wireline number. In the prior art, the wireless number and the wireline number are completely different. Therefore, the wireless number and the wireline number of the wireless terminal are bound at the network side, i.e. the wireless number and the wireline number of the wireless terminal are corresponding to each other. When the wireless terminal is in the wireline state, the network side can transfer the wireless call of the wireless terminal to the wireless terminal, which is in the wireline state, according to the corresponding relationship by the existing call transfer technique, and then the wireless terminal can be called through the wireline number. Similarly, when the wireless terminal is in the wireless state, the network side can transfer the wireline call of the wireless terminal to the wireless terminal, which is in the wireless state, according to the corresponding relationship by the existing call transfer technique, and then the wireless terminal can be called through the wireless number.

When the wireless terminal changes the signal receiving state, the wireless terminal can send a corresponding call transfer signal to the network side at the same time, so that the network side can perform the corresponding call transfer procedure. When the wireless terminal is switched from the wireline state to wireless state, the wireless terminal will send to the wireline network side a call transfer of transferring the wireline number to the wireless number, so that the wireline network side can transfer all calls of the wireline number to the corresponding wireless number. When the wireless terminal is switched from the wireless state to the wireline state, the wireless terminal will send to the wireless network side a call transfer of transferring the wireless number to the wireline number, so that the wireless network side can transfer all calls of the wireless number to the corresponding wireline number.

The wireless terminal can be a wireless terminal of various types, such as WCDMA terminals, GSM terminals and Code Division Multiple Access (CDMA) terminals. The wireless terminal can also receive other kinds of signals which are transmitted through wireline access, if only there is wireline access.

The present invention is described above with reference to particular embodiments, and it will be readily apparent to those skilled in the art that it is possible to embody the present invention in forms other than those described above. The particular embodiments described above are merely illustrative and should not be considered restrictive in any way. The scope of the present invention is determined by the following claims, and all variations, modifications and equivalents that fall within the range of the claims are intended to be embraced therein.

## Claims

1. A dual-mode terminal, comprising:
a wireless interface module (110);
a wireless access module (105) and a wireless protocol processing module (102), for processing received wireless signals to implement a wireless communication;
**characterized by**:
a wireline access module (108) and a wireline protocol processing module(103), connected to each other, for implementing a wireline communication by processing wireline signals received from a switching control module;
the switching control module(106), connected with the wireless access module(105), the wireline interface module(107) and the wireline access module(108) respectively, for a monitoring plugging/pulling state of a telephone line in the wireline interface module(107), controlling switching between the wireline access module(108) and the wireless access module(105) according to the plugging/pulling state, sending a switching signal to a protocol control module(104), and forwarding the wireline signals received from the wireline interface module(107) to the wireline access module(108) when switching to the wireless access module;
the protocol control module(104), connected with the switching control module(106), the wireless protocol processing module(102) and the wireline protocol processing module(103) respectively, for receiving the switching signal from the switching control module(106) and switching between the wireline protocol processing module(103) and the wireless protocol processing module(102) according to the switching signal; and
the terminal is configured with a wireless number and a wireline number, and adapted to send a call transfer signal to a network side to transfer a call directed to the wireless number to the wireline number or transfer a call directed to the wireline number to the wireless number according to the switching signal.

2. The terminal according to claim 1, further comprising:
a common processing module(101), connected with the wireline protocol processing module(103) and the wireless protocol processing module(102), adapted to process the wireline signals received from the wireline protocol processing module (103) and the wireless signals received from the wireless protocol processing module(102).

3. The terminal according to claim 1, further comprising:
a power supply module(109), which is connected with the wireline access module(108), the wireless access module(105) and the switching control module(106) respectively, and for supplying power for the wireline access module(108), the wireless access module(105) and the switching control module(106).

4. The terminal according to claim 1, wherein the wireline interface module (107) is an extended interface of the terminal, connected to a telephone interface of a telephone line, for receiving wireline signals from the telephone line.

5. The terminal according to claim 1, wherein the terminal is further adapted to send the call transfer signal to the network side to transfer the call directed to the wireless number to the wireline number when the terminal is switched from a wireless state to a wireline state.

6. The terminal according to claim 1, wherein the terminal is further adapted to send the call transfer signal to the network side to transfer the call directed to the wireline number to the wireless number when the terminal is switched from a wireline state to a wireless state.

7. The terminal according to claim 1, wherein the wireless number and the wireline number are bound at the network side.

8. A method for implementing dual-mode access using the terminal of any one of claims 1 to 7, comprising:
sending, by the terminal, a call transfer signal to a network side to transfer a call directed to the wireless number to the wireline number or transfer a call directed to the wireline number to the wireless number according to the switching signal.

9. The method according to claim 8, wherein the sending the call transfer signal to the network side to transfer the call directed to wireless number to the wireline number or transfer the call directed to the wireline number to the wireless number comprises:
when the terminal is switched from a wireless state to a wireline state, sending, by the terminal, the call transfer signal to the network side to transfer the call directed to the wireless number to the wireline number; and
when the terminal is switched from a wireline state to a wireless state, sending, by the terminal, the call transfer signals to the network side to transfer the call directed to the wireline number to the wireless number.

10. The method according to claim 8 or 9, further comprising:
monitoring, by the terminal, whether a telephone line being plugged-in the terminal; and
if the telephone line being plugged-in the terminal, switching from a wireless state to a wireline state.

11. The method according to claim 8 or 9, further comprising:
monitoring_by the terminal, whether a telephone line being pulled out of the terminal; and
if the telephone line being pulled out of the terminal, switching from a wireline state to a wireless state.

12. The method according to claim 10 or 11, wherein the monitoring whether the telephone line being plugged-in or pulled out comprises any one of:
monitoring voltage variations of a wireline interface module of the terminal; and
monitoring whether there is any wireline telephone signaling at the wireline interface module of the terminal.

## Patentansprüche

1. Dual-Mode- bzw. Zwei-Moden-Endgerät, welches aufweist:
ein Funkschnittstellenmodul (110);
ein Funkzugriffsmodul (105) und ein Funkprotokoll-Verarbeitungsmodul (102), um empfangene Funksignale zu bearbeiten, um eine Funkkommunikation zu implementieren;
**gekennzeichnet durch**:
ein Leitungszugriffsmodul (108) und ein Leitungsprotokoll-Verarbeitungsmodul (103), welche miteinander verbunden sind, um eine leitungsgebundene Kommunikation **durch** das Verarbeiten von Leitungssignalen bzw. drahtgebundenen Signalen zu bearbeiten, welche von einem Vermittlungssteuermodul empfangen werden;
wobei das Vermittlungssteuermodul (106), welches mit dem Funkzugriffsmodul (105), dem Leitungsschnittstellenmodul (107) und dem Leitungszugriffsmodul (108) jeweils verbunden ist, um ein Überwachen des zugeschalteten/getrennten Zustandes einer Telefonleitung in dem Leitungsschnittstellenmodul (107) zu überwachen, das Schalten bzw. Vermitteln zwischen dem Leitungszugriffsmodul (108) und dem Funkzugriffsmodul (105) entsprechend dem Zuschalt-/getrennten Zustand steuert, ein Schalt- bzw. Vermittlungssignal an ein Protokoll-Steuermodul (104) sendet und die Leitungssignale, welche von dem Leitungsschnittstellenmodul (107) empfangen werden, an das Leitungszugriffsmodul (108) weiterleitet, wenn es zu dem Funkzugriffsmodul schaltet;
wobei das Protokoll-Steuermodul (104), welches mit dem Vermittlungssteuermodul (106), dem Funkprotokoll-Verarbeitungsmodul (102) und dem Leitungsprotokoll-Verarbeitungsmodul (103) verbunden ist, um das Vermittlungssignal von dem Vermittlungssteuermodul (106) zu empfangen und um zwischen dem Leitungsprotokoll-Verarbeitungsmodul (103) und dem Funkprotokoll-Verarbeitungsmodul (102) entsprechend dem Vermittlungssignal zu schalten; und
wobei das Endgerät mit einer Funknummer und einer Leitungsnummer konfiguriert ist und geeignet ist, ein Anrufübertragungssignal zu einer Netzseite zu senden, um einen Anruf, welcher an die Funknummer gerichtet ist, an die Leitungsnummer zu übertragen, und einen Anruf, welcher an die Leitungsnummer gerichtet ist, an die Funknummer entsprechend dem Vermittlungssignal zu übertragen.

2. Endgerät nach Anspruch 1, welches ferner aufweist:
ein gewöhnliches Verarbeitungsmodul (101), welches mit dem Leitungsprotokoll-Verarbeitungsmodul (103) und dem Funkprotokoll-Verarbeitungsmodul (102) verbunden ist und welches geeignet ist, die Leitungssignale, welche von dem Leitungsprotokoll-Verarbeitungsmodul (103) empfangen werden, und die Funksignale, welche von dem Funkprotokoll-Verarbeitungsmodul (102) empfangen werden, zu verarbeiten.

3. Endgerät nach Anspruch 1, welches ferner aufweist:
ein Spannungsversorgungsmodul (109), welches mit dem Leitungszugriffsmodul (108), dem Funkzugriffsmodul (105) und dem Vermittlungssteuermodul (106) jeweils verbunden ist, und um Spannung für das Leitungszugriffsmodul (108), das Funkzugriffsmodul (105) und das Vermittlungssteuermodul (106) zu liefern.

4. Endgerät nach Anspruch 1, wobei das Leitungsschnittstellenmodul (107) eine erweiterte Schnittstelle des Endgerätes ist, welche an eine Telefonschnittstelle einer Telefonleitung angeschlossen ist, um Leitungssignale von der Telefonleitung zu empfangen.

5. Endgerät nach Anspruch 1, wobei das Endgerät ferner geeignet ist, das Anrufübertragungssignal an die Netzseite zusenden, um den Anruf, welcher an die Funknummer gerichtet ist, an die Leitungsnummer zu übertragen, wenn das Endgerät von einem Funkzustand zu einem Leitungszustand geschaltet ist.

6. Endgerät nach Anspruch 1, wobei das Endgerät ferner geeignet ist, das Anrufübertragungssignal an die Netzseite zu senden, um den Anruf, welcher an die Leitungsnummer gerichtet ist, an die Funknummer zu übertragen, wenn das Endgerät von einem Leitungszustand zu einem Funkzustand geschaltet ist.

7. Endgerät nach Anspruch 1, wobei die Funknummer und die Leitungsnummer an die Netzseite gebunden sind.

8. Verfahren zum Implementieren eines Zwei-Moden-Zugriffs, wobei das Endgerät nach einem der Ansprüche 1 bis 7 benutzt wird, welches aufweist:
Senden eines Anrufübertragungssignals durch das Endgerät zu einer Netzseite, um einen Anruf, welcher an die Funknummer gerichtet ist, an die Leitungsnummer zu übertragen, oder einen Anruf, welcher an die Leitungsnummer gerichtet ist, an die Funknummer entsprechend dem Vermittlungssignal zu übertragen.

9. Verfahren nach Anspruch 8, wobei das Senden des Anrufübertragungssignals an die Netzseite, um den Anruf, welcher an die Funknummer gerichtet ist, an die Leitungsnummer zu übertragen oder um den Anruf, welcher an die Leitungsnummer gerichtet ist, an die Funknummer zu übertragen, aufweist:
wenn das Endgerät von einem Funkzustand zu einem Leitungszustand geschaltet wird, Senden des Anrufübertragungssignals durch das Endgerät an die Netzseite, um den Anruf, welcher an die Funknummer gerichtet ist, an die Leitungsnummer zu übertragen; und
wenn das Endgerät von einem Leitungszustand zu einem Funkzustand geschaltet ist, Senden des Anrufübertragungssignals durch das Endgerät an die Netzseite, um den Anruf, welcher an die Leitungsnummer gerichtet ist, an die Funknummer zu übertragen.

10. Verfahren nach Anspruch 8 oder 9, welches ferner aufweist:
Überwachen durch das Endgerät, ob eine Telefonleitung in dem Endgerät eingestöpselt ist; und
falls die Telefonleitung in dem Endgerät eingestöpselt ist, Umschalten von einem Funkzustand zu einem Leitungszustand.

11. Verfahren nach Anspruch 8 oder 9, welches ferner aufweist:
Überwachen durch das Endgerät, ob eine Telefonleitung aus dem Endgerät herausgezogen ist; und
falls die Telefonleitung aus dem Endgerät herausgezogen ist, Umschalten von einem Leitungszustand zu einem Funkzustand.

12. Verfahren nach Anspruch 10 oder 11, wobei das Überwachen, ob die Telefonleitung eingestöpselt oder ausgestöpselt ist, einen der folgenden Vorgänge aufweist:
Überwachen der Spannungsänderungen eines Leitungsschnittstellenmoduls des Endgerätes; und
Überwachen, ob es irgendein Senden eines Leitungstelefonsignals an dem Leitungsschnittstellenmodul des Endgerätes gibt.

## Revendications

1. Terminal double mode, comportant :
- un module d'interface sans fil (110);
- un module d'accès sans fil (105) et un module de traitement de protocole sans fil (102), destiné à traiter des signaux reçus sans fil pour mettre en oeuvre une communication sans fil ;
**caractérisé par** :
un module d'accès filaire (108) et un module de traitement de protocole filaire (103), reliés entre eux, destinés à mettre en oeuvre une communication filaire en traitant des signaux filaires reçus en provenance d'un module de commande de commutation ;
le module de commande de commutation (106), relié respectivement au module d'accès sans fil (105), au module d'interface filaire (107) et au module d'accès filaire (108), pour un état de contrôle branché/débranché d'une ligne téléphonique dans le module d'interface filaire (107), commandant la commutation entre le module d'accès filaire (108) et le module d'accès sans fil (105) en fonction de l'état branché/débranché, envoyant un signal de commutation à un module de commande de protocole (104), et transmettant les signaux filaires provenant du module d'accès filaire (107) au module d'accès filaire (108) lors de la commutation sur le module d'accès sans fil ;
le module de commande de protocole (104), relié respectivement au module de commande de commutation (106), au module de traitement de protocole sans fil (102) et au module de traitement de protocole filaire (103), destiné à recevoir le signal de commutation provenant du module de commande de commutation (106) et de commuter entre le module de traitement de protocole filaire (103) et le module de traitement de protocole sans fil (102) en fonction du signal de commutation ; et
le terminal étant configuré avec un numéro sans fil et un numéro filaire, adapté à envoyer un signal de transfert d'appel à un côté réseau pour transférer un appel adressé au numéro sans fil vers le numéro filaire ou pour transférer un appel adressé au numéro filaire vers le numéro sans fil en fonction du signal de commutation.

2. Terminal selon la revendication 1, comportant en outre : un module de traitement commun (101), relié au module de traitement de protocole filaire (103) et au module de traitement de protocole sans fil (102), adapté à traiter les signaux filaires reçus en provenance du module de traitement de protocole (103) et les signaux sans fil reçus en provenance du module de traitement de protocole sans fil (102).

3. Terminal selon la revendication 1, comportant en outre : un module d'alimentation électrique (109), qui est relié respectivement au module d'accès filaire (108), au module d'accès sans fil (105) et au module de commande de commutation (106), et destiné à alimenter en courant le module d'accès filaire (108), le module d'accès sans fil (105) et le module de commande de commutation (106).

4. Terminal selon la revendication 1, dans lequel le module d'interface filaire (107) est une interface étendue du terminal, reliée à une interface téléphonique d'une ligne téléphonique, destinée à recevoir les signaux filaires en provenance de la ligne téléphonique.

5. Terminal selon la revendication 1, dans lequel le terminal est en outre adapté à envoyer le signal de transfert d'appel au côté réseau afin de transférer l'appel adressé au numéro sans fil vers le numéro filaire quand le terminal est commuté d'un état sans fil à un état filaire.

6. Terminal selon la revendication 1, dans lequel le terminal est en outre adapté à envoyer le signal de transfert d'appel au côté réseau pour transférer l'appel adressé au numéro filaire vers le numéro sans fil quand le terminal est commuté d'un état filaire à un état sans fil.

7. Terminal selon la revendication 1, dans lequel le numéro sans fil et le numéro filaire sont liés au côté réseau.

8. Procédé destiné à mettre en oeuvre un accès double mode utilisant le terminal de l'une quelconque des revendications 1 à 7, comportant : l'envoi, par le terminal, d'un signal de transfert d'appel à un côté réseau pour transférer un appel adressé au numéro sans fil vers le numéro filaire ou pour transférer un appel adressé au numéro filaire vers le numéro sans fil en fonction du signal de commutation.

9. Procédé selon la revendication 8, dans lequel l'envoi du signal de transfert d'appel au côté réseau destiné à transférer l'appel adressé au numéro sans fil vers le numéro filaire ou pour transférer l'appel adressé au numéro filaire vers le numéro sans fil comporte :
quand le terminal est commuté d'un état sans fil à un état filaire, l'envoi, par le terminal, du signal de transfert d'appel au côté réseau destiné à transférer l'appel adressé au numéro sans fil vers le numéro filaire ; et
quand le terminal est commuté d'un état filaire à un état sans fil, l'envoi, par le terminal, du signal de transfert d'appel au côté réseau destiné à transférer l'appel adressé au numéro filaire vers le numéro sans fil.

10. Procédé selon la revendication 8 ou 9, comportant en outre :
le contrôle, par le terminal, consistant à vérifier si une ligne téléphonique est branchée au terminal ;
et,
si la ligne téléphonique est branchée au terminal, la commutation d'un état sans fil à un état filaire.

11. Procédé selon la revendication 8 ou 9, comportant en outre :
le contrôle, par le terminal, consistant à vérifier si une ligne téléphonique est débranchée du terminal ; et
si la ligne téléphonique est débranchée du terminal, la commutation d'un état filaire à un état sans fil.

12. Procédé selon la revendication 10 ou 11, dans lequel le contrôle, que la ligne téléphonique soit branchée ou débranchée, comporte l'un quelconque des contrôles suivants :
contrôle des variations de tension d'un module d'interface filaire du terminal ; et
contrôle consistant à vérifier si l'un quelconque des téléphones filaires envoie un signal au module d'interface filaire du terminal.
